# FASCICULE DE BREVET EUROPEEN

(11) **EP 3 066 867 B1**
(45) Date de publication et mention de la délivrance du brevet: **24.02.2021**
(21) Numéro de dépôt: 13814192.4
(22) Date de dépôt: 05.11.2013
(51) Int. Cl.: H04W 36/14

(54) **PROCEDE D'ETABLISSEMENT D'UNE CONNEXION ENTRE UN OBJET COMMMUNICANT MOBILE ET UN SERVEUR DISTANT**
VERFAHREN ZUR HERSTELLUNG EINER VERBINDUNG ZWISCHEN EINEM MOBILKOMMUNIKATIONSOBJEKT UND EINEM ENTFERNTEN SERVER
METHOD OF ESTABLISHING A CONNECTION BETWEEN A MOBILE COMMUNICATING OBJECT AND A REMOTE SERVER

(43) Date de publication de la demande: 14.09.2016
(73) Titulaire: Edevice, 33700 Merignac (FR)
(72) Inventeur: BONNET, Fabrice, F-33700 Merignac (FR); GOMES, Stéphane, F-33700 Merignac (FR); GONNET, Stefan, F-33700 Merignac (FR); SCHINAZI, Stéphane, F-33700 Merignac (FR)
(74) Mandataire: IP Trust
(86) Numéro de dépôt international: PCT/FR2013/052628
(87) Numéro de publication internationale: WO 2015/067858

(56) Documents cités:
- EP-A1- 2 048 910
- WO-A1-2005/048631
- WO-A1-2007/015574
- US-A1- 2005 157 677
- US-A1- 2006 221 903

## Description

### Domaine de l'invention

La présente invention concerne le domaine de l'accès à des services à partir d'un équipement mobile tel qu'un téléphone cellulaire ou encore un équipement interactif dialoguant avec un équipement distant par l'intermédiaire d'un réseau mobile terrestre public (en anglais Public Land Mobile Network ou PLMN). Plus précisément, l'invention concerne :
- la communication entre équipements électroniques de type « M2M » (machine-to-machine),
- l'itinérance (ou « roaming ») international, permettant à un abonné d'un opérateur d'accéder à leurs services de téléphonie mobile (voix ou données) depuis différents réseaux au cours d'un déplacement résultant du fait que le réseau mobile GSM conserve à chaque instant une information sur la zone de localisation de l'abonné mobile dans un pays différent de celui de l'opérateur
- en particulier dans le cas du cellulaire utilisé pour un appareil fixe (mais pas uniquement).

Les réseaux GSM permettent de manière connue aux utilisateurs autorisés d'accéder à différents services (téléphonie, messagerie, transmissions de données, diffusions de contenus audiovisuels...) en situation de mobilité à partir de terminaux portatifs. Selon le pays et l'opérateur, il peut reposer sur différentes architectures normalisées, comme GSM, CDMA et UMTS notamment.

Dans la plupart des pays, il existe plusieurs réseaux mobiles terrestres publics (PLMN) qui sont exploités par des opérateurs différents. Ils sont généralement interconnectés entre eux, ce qui permet d'établir des communications entre terminaux enregistrés sur des réseaux mobiles différents. Ils sont également interconnectés avec le réseau téléphonique commuté (RTC ou « réseau fixe »), ce qui permet d'établir des communications entre terminaux mobiles et terminaux fixes.

Le choix du réseau est effectué soit manuellement par une sélection parmi les réseaux apparaissant comme disponible sur l'équipement mobile, soit plus généralement de manière automatique selon des règles fixées par l'opérateur principal auprès duquel l'utilisateur a pris un abonnement, et des accords passés entre cet opérateur principal et les opérateurs du PLMN local.

### Etat de la technique

Dans la plupart des produits embarquant un module cellulaire de type GSM / GPRS / 3G / 4G, la sélection de la porteuse GSM (PLMN) est traitée automatiquement par le module radio. Dans ce mode automatique, la sélection de la porteuse GSM est complètement gérée par le module radio. Cette solution est pratique car elle traite de situations telles que la recherche d'un opérateur dans un nouveau pays (« roaming ») ou permet de passer à un autre opérateur lorsque la couverture est perdue.

La sélection manuelle ou automatique en fonction des règles fixées par l'opérateur principal n'est pas la seule solution.

On connaît dans l'état de la technique le brevet français FR2949179 qui décrit un procédé d'établissement d'une connexion entre un objet communicant mobile et un réseau de communication mobile où l'objet communicant dispose d'une liste regroupant un nombre déterminé de réseaux de communication mobile préférés avec lequel l'objet peut être amené à se connecter. Cette liste comprend une pluralité de sous-listes de réseaux (PLMN) hiérarchisées de sorte que les réseaux (PLMN) inclus dans une sous-liste sont préférés à l'ensemble des réseaux inclus dans les sous-listes de rang supérieur.

Ce procédé de l'art antérieur comprend les étapes consistant à :
- détecter des réseaux disponibles
- si l'un au moins des réseaux détectés appartient à la liste, se connecter au réseau préféré parmi lesdits réseaux détectés, ledit réseau préféré étant le réseau appartenant à la sous-liste de plus petit rang
- si le réseau préféré parmi les réseaux détectés appartient à une sous-liste de rang n supérieur ou égal à 2 :
   i) rechercher à intervalles réguliers la disponibilité de nouveaux réseaux ;
   ii) si un ou plusieurs réseaux appartenant à une ou des sous-listes de rang inférieur ou égal à n sont détectés comme étant disponibles, se connecter au réseau détecté appartenant à la sous-liste de plus petit rang.

On connaît aussi dans l'état de la technique la demande de brevet américaine US 20090207812 décrivant un procédé de commutation d'un dispositif à partir d'un réseau source à un réseau cible, le réseau source étant l'un d'un réseau WiMAX et un réseau 3GPP et le réseau cible étant un autre réseau WiMAX et le réseau 3GPP, comportant des informations de réception provenant du dispositif sur le réseau de source et sur le réseau cible. Les informations reçues à partir du dispositif peuvent être supervisées pour déterminer si les paramètres du réseau de la source ont franchi un seuil de transfert intercellulaire. Les informations reçues à partir du dispositif peuvent aussi être contrôlée afin de déterminer si les paramètres du réseau cible sont adaptés pour un transfert.

On connaît aussi le brevet international WO 2008000914 proposant une solution de mesure de cellule voisine et signalement dans un environnement de technologies par accès radio (RAT) multiples

Un équipement d'utilisateur (UE) réalise des mesures de cellules voisines avec une technologie par accès inter-radio (RAT) pendant un mode de veille de l'UE. Les résultats de mesures inter-RAT peuvent être stockés dans une mémoire interne de l'UE pendant le mode de veille. Lorsque l'UE déclenche un établissement de la connexion, un rapport de mesures inter-RAT contenant des résultats de mesures inter-RAT obtenus pendant le mode de veille est envoyé au réseau lors de l'établissement de la connexion. En conséquence, les informations de mesures inter-RAT sont immédiatement disponibles pour une décision de réseau au commencement du mode connecté. Par exemple, un transfert intercellulaire inter-RAT peut être décidé et réalisé sans délai, sur la base des mesures inter-RAT faites par avance pendant le mode de veille et signalées lors de l'établissement de la connexion.

L'art antérieur comprend aussi le brevet européen EP1986372 décrivant un procédé et un appareil pour supporter un transfert entre des réseaux d'accès hétérogènes est décrit, dans lequel une information d'équipement d'utilisateur et les informations de réseau d'accès candidat est détecté, une décision de transfert est évalué sur la base de l'information de l'équipement d'utilisateur et les informations de réseau d'accès de candidat, et un réseau d'accès est choisi parmi une pluralité de réseaux d'accès candidats sur la base de la décision de transfert intercellulaire.

Le brevet international WO 2005115039 concerne un procédé de transfert d'une communication établie entre un terminal de radiocommunication et un premier système de radiocommunication, à un deuxième système de radiocommunication. Pour la transmission d'informations, le premier système de radiocommunication utilise un premier standard de radiocommunication et le deuxième système de radiocommunication utilise un deuxième standard de radiocommunication. Le terminal de radiocommunication surveille non seulement les cellules radio adjacentes du premier système de radiocommunication mais aussi les cellules radio adjacentes du deuxième système de radiocommunication par des mesures et transmet les niveaux de signaux mesurés valables des cellules radio surveillées du premier et du deuxième système de radiocommunication à un dispositif de contrôle côté réseau. Dans le cas où la les niveaux de signaux mesurés ne sont occasionnellement pas formés lors de la surveillance des cellules radio par le deuxième système de radiocommunication, le terminal de radiocommunication transmet des niveaux de signaux prédéterminées au dispositif de contrôle. Le terminal de radiocommunication utilise un symbole qui permet au réseau de distinguer les niveaux de signaux mesurés valables des niveaux de signaux prédéterminés. Lorsque le transfert de communication est commandé par le dispositif de contrôle, seuls les niveaux de signaux mesurés valables sont pris en considération.

On connaît aussi dans l'état de la technique la demande de brevet US2005157677 décrivant un système et une méthode pour permettre à une unité mobile d'accéder à une pluralité de fournisseurs d'accès sans fil associés.

Ce document concerne les couches basses de communication, et plus particulièrement l'établissement d'une communication entre un équipement sans fil et un réseau choisi parmi les réseaux radio accessibles localement.

On connaît aussi le document WO2005048631 décrivant un procédé de sélection de réseau "automatique" permettant à un utilisateur de station mobile de sélectionner manuellement à partir d'une pluralité de réseaux disponibles dans la liste qui sont affichées de manière visible sur l'appareil mobile. Cette méthode de sélection du réseau classique peut être considéré comme une méthode de sélection du réseau "manuel".

Ce document concerne également le protocole de sélection au niveau des couches basses de communication.

### Inconvénient de l'art antérieur

Les solutions de l'art antérieur conduisent à une sélection du réseau du PLMN en fonction de critères prenant en compte principalement les accords commerciaux entre les opérateurs et la puissance du signal radio reçu localement.

Or, pour certaines applications, d'autres critères sont prépondérants : disponibilité de certains accès (ports TCP par exemple) pour des transmissions de données spécifiques. A titre d'exemple, de telles applications concernant la télétransmission de données médicales, par exemple par un patient équipé de capteurs biomédicaux, par exemple d'appareil de mesure des paramètres de santé (poids, pouls, tension artérielle, taux d'oxygénation du sang, glucomètre), déclenchant automatiquement l'envoi de données numériques via le réseau mobile à un centre serveur.

La sélection effectuée conformément à l'état de la technique ne permet pas de privilégier le réseau le plus approprié et cela peut conduire à des situations graves d'indisponibilité du service du fait d'une sélection inappropriée du réseau.

Dans certains cas, le module radio s'enregistre aux réseaux GSM sur lesquels:
- Seulement le service voix GSM est pris en charge lorsque le produit requiert un service GPRS. Le GPRS n'est pas supporté par l'opérateur.
- Le GPRS est pris en charge, mais l'accès à l'APN pour récupérer une adresse IP n'est pas possible (indisponibilité temporaire, problèmes d'accord, etc.)
- Une adresse IP est attribuée au produit, mais la communication IP n'est pas possible (équipement défectueux sur le chemin (c.-à-routeur), etc.)
- La tarification n'est pas adaptée à l'application.
- Des opérations de maintenance conduisant à l'indisponibilité du service sont prévues.
- Le réseau choisi est celui qui présente le signal le plus fort mais est également celui qui est le plus saturé.
- Le réseau choisi était bien le plus adapté au moment du choix, mais la qualité du signal radio a baissé sans que le module ne change de réseau.

L'enregistrement à ces réseaux selon les solutions de l'art antérieur est donc un problème lorsque le produit a besoin d'un accès GSM / GPRS / 3G / 4G.

Par ailleurs, dans les solutions proposées dans l'art antérieur, c'est le serveur qui contrôle la sélection du réseau à partir de critères prédéfinis dans ce serveur.

### Solution apportée par l'invention

La présente invention vise à remédier à cet inconvénient en proposant un procédé d'établissement d'une connexion entre un objet mobile doté d'un module radio et un serveur distant de l'objet mobile, par l'intermédiaire d'un réseau de communication mobile où l'objet mobile dispose d'une liste regroupant un nombre déterminé de réseaux de communication mobile préférés avec lesquels l'objet mobile peut être amené à se connecter, caractérisé en ce qu'il comporte :
- une première étape d'établissement par ledit objet mobile d'une connexion radio avec le serveur au moyen d'un réseau de communication mobile disponible parmi lesdits réseaux de communication mobile préférés et de transmission sur ladite connexion radio d'un identifiant de l'objet mobile, d'un identifiant dudit réseau disponible, et d'une première série d'informations d'audit, comportant au moins une information choisie parmi le niveau du signale de réception, un niveau d'erreur,
- si le serveur (reçoit ladite première série d'information, puis une étape de vérification par ledit serveur (5) de données reçues et,
- une étape d'émission d'un accusé de réception à destination dudit objet mobile validant un lien IP entre ledit objet mobile et ledit serveur, et indiquant, en fonction du résultat de ladite étape de vérification, si le réseau de communication mobile auquel ledit objet mobile est connecté est approprié ou si un autre réseau de communication mobile
et en ce que, si l'objet mobile ne reçoit pas du serveur un accusé de réception, ledit module radio sélectionne automatiquement un autre réseau de communication mobile disponible.

Avantageusement, le serveur distant attend en mode de veille les messages UDP entrants provenant de l'objet communicant mobile intégrant un module GSM, et en ce que lors de la réception d'un message UDP, le serveur tente d'identifier le produit communicant mobile émetteur par la récupération d'un numéro de série unique (tel que le champ SIMID).

Cette solution permet une fonctionnalité de sélection d'un autre réseau PLMN », lorsque l'objet communicant mobile ne reçoit pas d'accusé de réception de validant le lien IP. Cette caractéristique présente l'avantage de fournir une autonomie de l'objet communicant mobile par rapport au serveur distant.

Selon un mode de mise en œuvre préféré, le procédé selon l'invention comporte une étape de vérification par le serveur si le produit communicant identifié est enregistré dans ses registres internes (base de données, fichiers ...), et si un PLMN est spécifié comme le préféré PLMN, ladite étape étant exécutée après l'identification d'un objet mobile connecté.

De préférence, si le réseau PLMN préféré spécifié est le même que celui utilisé pour l'envoi du message entrant, le serveur accuse réception du message entrant pour indiquer à l'objet mobile communicant que la liaison IP fonctionne correctement et qu'aucun changement de réseau n'est nécessaire.

De préférence, si le réseau PLMN préféré spécifié est différent de celui utilisé pour l'envoi du message entrant, le serveur accuse réception du message entrant pour indiquer à l'appareil distant que la liaison IP fonctionne correctement, et spécifie une information sur le réseau PLMN nouveau que l'objet communicant mobile doit sélectionner.

Avantageusement, si l'objet communicant ne reçoit pas du serveur un accusé de réception validant le lien IP après l'établissement d'une communication à partir d'un premier réseau PLMN, le module radio sélectionne un autre réseau PLMN disponible et recommence la même procédure.

### Description détaillée de l'invention

L'invention sera mieux comprise à la lecture de la description détaillée qui suit, se référant à un exemple non limitatif de réalisation illustrée par les dessins annexés, où :
- la figure 1 représente un schéma de principe des échanges entre l'équipement mobile, le serveur et le réseau public
- la figure 2 représente un exemple de trame de signaux UDP envoyé par l'équipement client CASAAS (« Carrier Selection As A Service »)
- la figure 3 représente un exemple de trame de signaux UDP reçu par le client CASAAS .

L'équipement mobile (1) comprend de manière connue un module radio et une antenne. Ce module radio embarque les moyens GSM/GPRS habituels pour l'établissement d'une connexion avec le réseau GSM (2) et le réseau GPRS (3) par l'intermédiaire des infrastructures réseau (4).

L'invention met en œuvre en outre un serveur (5) dit CASAAS (« Carrier Selection As A Service »).

L'équipement mobile peut être à titre d'exemple non limitatif un équipement de télémédecine comportant un module GSM, qui permettra de surveiller le rythme cardiaque d'une personne à risque et de déclencher une procédure en cas de risque d'infarctus, ou encore un équipement de télémédecine pour aider les diabétiques à suivre leur glycémie et à déclencher une assistance à distance en cas de problème.

Le module GSM est associé à une carte d'abonnement ou un identifiant d'abonnement (dans le cas du CDMA pour lequel il n'y a pas de SIM), par exemple une carte SIM, fournie par un opérateur, dont les informations pilotent le module radio, notamment pour la sélection du réseau.

Les signaux transmis sont des signaux numériques, nécessitant l'accès à des ports dédiés qui ne sont pas toujours disponibles.

La solution proposée par la présente invention consiste à mettre en œuvre un algorithme de niveau supérieur pour la sélection de l'opérateur GSM. Cet algorithme remplace l'algorithme du module radio pour la sélection automatique de l'opérateur.

Elle met en œuvre un serveur CASAAS (« Carrier Selection As A Service ») qui teste le lien IP lors d'une connexion par un objet mobile communicant et commande une procédure de sélection d'un autre opérateur en cas de défaillance.

Un client CASAAS est incorporé dans l'objet mobile communicant. Il peut être lancé à un moment déterminé, comme le démarrage du produit, la demande pour une nouvelle connexion ou en mode veille.

Dès qu'un réseau PLMN a été sélectionné par le module radio, le client CASAAS envoie un message au serveur CASAAS comprenant l'identifiant du réseau PLMN utilisé. Eventuellement plusieurs adresses de serveurs CASAAS peuvent être utilisées à des fins de redondance.

Si le client CASAAS ne reçoit pas un accusé de réception, le lien IP sur ce PLMN n'a pas été validé par le serveur CASAAS. Il commande alors le module radio pour se connecter via le prochain réseau PLMN disponible, puis redémarre le processus en envoyant un nouveau message.

Si le client CASAAS reçoit un accusé de réception, il considère que le lien IP sur ce PLMN a été validé par le serveur CASAAS. Ce message émis par le serveur CASAAS indique si le réseau PLMN utilisé est approprié ou si un autre réseau PLMN doit être sélectionné.

Si le serveur CASAAS commande la sélection d'un autre réseau, le client CASAAS conserve la trace de cette information afin de la réutiliser lors d'une prochaine connexion. Le lien IP validé par la reconnaissance du produit CASAAS est ensuite utilisé pour l'échange de données entre l'utilisateur et le serveur avant de passer à la sélection du nouveau PLMN.

Lorsque le produit commande le changement de réseau PLMN, il pilote le module radio pour sélectionner le nouveau réseau PLMN.

Une fois que le nouveau réseau PLMN est prêt pour une utilisation par le module, le client CASAAS envoie un nouveau message sur le serveur CASAAS qui procède à une nouvelle vérification.

Si pour certaines raisons, le serveur CASAAS ne peut être atteint en utilisant le nouveau réseau PLMN, le client CASAAS dirige le module radio pour passer au prochain réseau PLMN disponible. En option, un message peut être envoyé au serveur CASAAS avec un code d'erreur lié à la tentative infructueuse de joindre le nouveau réseau PLMN.

Enfin, le serveur CASAAS va modifier sa base de données interne en conséquence afin de ne pas laisser le produit dans un processus de boucle infinie pour tenter d'atteindre le nouveau PLMN. Cependant le serveur CASAAS peut émettre un message d'information à l'administrateur pour une analyse plus poussée de l'incapacité d'atteindre le réseau préféré PLMN.

Les informations échangées entre le client CASAAS et le serveur CASAAS sont de préférence constituées par des trames encodées selon le standard ASN.1

Chaque élément est encodé avec un type, une longueur, les valeurs et si nécessaire un marqueur de fin. Ce type d'encodage est couramment désigné par le sigle TLV (type-length-value / type-longueur-valeur). Ce format permet au récepteur du message de décoder des données au format ASN.1 même si le flux est incomplet et sans avoir de connaissances a priori de la taille, du contenu et de la sémantique des données.

Les types supportés sont :
- 00:: SIMID
- 01:: MCC/MNC (PLMN)
- 02:: niveau du signal de reception (désigné usuellement par "rssi part of the CSQ (reception level)")
- 03:: niveau d'erreur (désigné usuellement par "ber part of the CSQ (error level)")
- 04:: mode de sélection par le module GSM
- 05:: requête d'appel du serveur

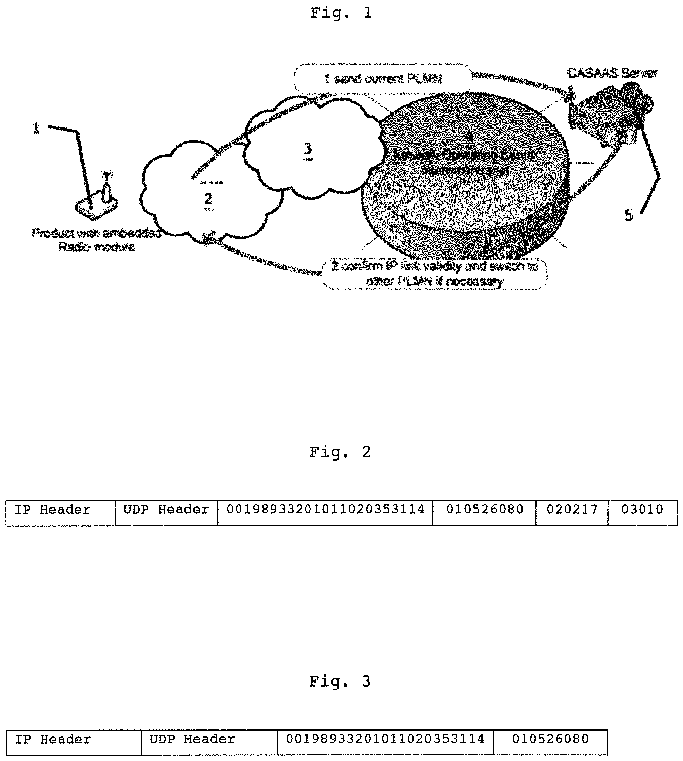

La figure 2 représente un exemple de trame de signaux UDP envoyé par le client CASAAS et la figure 3 représente un exemple de trame de signaux UDP reçu par le client CASAAS.

Enfin le serveur CASAAS peut stocker la liste des essais réussis et infructueux qui lui sont communiqués par les clients CASAAS déployés sur le terrain et ainsi constituer une base de connaissance autoalimentée qui peut être utilisée pour piloter les connexions futures. Ces informations peuvent notamment être couplées à des informations de géolocalisation pour créer une topographie des expériences de connexion à un réseau mobile.

A la différence de l'enseignement de l'art antérieur le terminal procède à la sélection du réseau PLMN en fonction de ses propres traitements, réalisés par une application cliente installée et exécutée par le terminal, et non pas en fonction des traitements réalisés par le serveur de l'opérateur. Si l'objet communicant ne reçoit pas du serveur un accusé de réception validant le lien IP après l'établissement d'une communication à partir d'un premier réseau PLMN, le module radio sélectionne un autre réseau PLMN disponible.

## Revendications

1. Procédé d'établissement d'une connexion entre un objet mobile (1) doté d'un module radio et un serveur (5) distant de l'objet mobile, par l'intermédiaire d'un réseau de communication mobile où l'objet mobile (1) dispose d'une liste regroupant un nombre déterminé de réseaux de communication mobile préférés avec lesquels l'objet mobile peut être amené à se connecter, le procédé comportant :
- une première étape d'établissement par ledit objet mobile d'une connexion radio avec le serveur (5) au moyen d'un réseau de communication mobile disponible parmi lesdits réseaux de communication mobile préférés et de transmission sur ladite connexion radio d'un identifiant de l'objet mobile, d'un identifiant dudit réseau disponible, et d'une première série d'informations d'audit, comportant au moins une information choisie parmi le niveau du signale de réception, un niveau d'erreur,
- si le serveur (5) reçoit ladite première série d'information, une étape de vérification par ledit serveur (5) des données reçues et,
une étape d'émission d'un accusé de réception à destination dudit objet mobile validant un lien IP entre ledit objet mobile et ledit serveur, et indiquant, en fonction du résultat de ladite étape de vérification, si le réseau de communication mobile auquel ledit objet mobile est connecté est approprié ou si un autre réseau de communication mobile doit être sélectionné par le module radio,
et en ce que, si l'objet mobile ne reçoit pas du serveur l'accusé de réception, ledit module radio sélectionne automatiquement un autre réseau de communication mobile disponible.

2. Procédé selon la revendication principale, dans lequel, en mode de veille, le serveur attend les messages entrants provenant de l'objet mobile et lors de la réception d'un message, ledit serveur tente d'identifier l'objet mobile à partir de l'identifiant de l'objet mobile reçu.

3. Procédé selon la revendication 1 ou 2, comportant en outre une étape de vérification par le serveur si l'objet mobile est enregistré dans ses registres internes, et si un réseau est spécifié comme le réseau préféré, ladite étape de vérification étant exécutée après une identification de l'objet mobile connecté.

4. Procédé selon la revendication précédente, dans lequel, si le réseau préféré spécifié est le même que celui utilisé pour l'envoi du message entrant, le serveur accuse réception du message entrant pour indiquer à l'objet mobile communicant que la liaison IP fonctionne correctement et qu'aucun changement de réseau n'est nécessaire.

5. Procédé selon la revendication 3, dans lequel, si le réseau préféré spécifié est différent de celui utilisé pour l'envoi du message entrant, le procédé comporte en outre une transmission par le serveur d'une information spécifique sur le réseau nouveau que l'objet mobile doit sélectionner.

## Patentansprüche

1. Verfahren zum Herstellen einer Verbindung zwischen einem mobilen Objekt (1), das mit einem Funkmodul versehen ist, und einem Server (5), der von dem mobilen Objekt entfernt ist, überein mobiles Kommunikationsnetzwerk, wobei das mobile Objekt (1) über eine Liste mit einer bestimmten Anzahl von bevorzugten mobilen Kommunikationsnetzwerken verfügt, mit denen das mobile Objekt veranlasst werden kann, sich zu verbinden, wobei das Verfahren umfasst:
- einen ersten Schritt des Herstellens einer Funkverbindung mit dem Server (5) durch das mobile Objekt mittels eines verfügbaren Mobilkommunikationsnetzwerks unter den bevorzugten Mobilkommunikationsnetzwerken und des Übertragens überdie Funkverbindung einer Kennung des mobilen Objekts, einer Kennung des verfügbaren Netzwerks und einer ersten Reihe von Prüfinformationen, einschließlich mindestens einer Information, die ausgewählt ist aus dem Pegel des Empfangssignals, einem Fehlerpegel,
- wenn der Server (5) die erste Reihe von Informationen empfängt, einen Schritt des Überprüfens, durch den Server (5), der empfangenen Daten und einen Schritt des Ausgebens einer Empfangsbestätigung an das mobile Objekt, die eine IP-Verbindung zwischen dem mobilen Objekt und dem Server validiert, und anzeigt, abhängig von dem Ergebnis des Überprüfungsschrittes, ob das mobile Kommunikationsnetzwerk, mit dem das mobile Objekt verbunden ist, geeignet ist oder ob ein anderes mobiles Kommunikationsnetzwerk durch das Funkmodul ausgewählt werden soll, und dass das Funkmodul automatisch ein anderes verfügbares mobiles Kommunikationsnetzwerk auswählt, wenn das mobile Objekt die Empfangsbestätigung vom Z-Server nicht erhält.

2. Verfahren nach dem Hauptanspruch, wobei der Server im Standby-Modus auf eingehende Nachrichten von dem mobilen Objekt wartet und bei Empfang einer Nachricht versucht, das mobile Objekt anhand der Kennung des empfangenen mobilen Objekts zu identifizieren.

3. Verfahren nach Anspruch 1 oder 2, ferner umfassend einen Schritt des Überprüfens durch den Server, ob das mobile Objekt in seinen internen Registern registriert ist und ob ein Netzwerk als bevorzugtes Netzwerk spezifiziert ist, wobei der Überprüfungsschritt nach einer Identifizierung des verbundenen mobile n Objekts durchgeführt wird.

4. Verfahren nach dem vorhergehenden Anspruch, wobei, wenn das spezifizierte bevorzugte Netzwerk das gleiche ist wie das, das zum Senden der eingehenden Nachricht verwendet wird, der Server den Empfang der eingehenden Nachricht bestätigt, um dem kommunizierenden mobilen Objekt anzuzeigen, dass die IP-Verbindung ordnungsgemäß funktioniert und keine Netzwerkänderung erforderlich ist.

5. Verfahren nach Anspruch 3, wobei, wenn das spezifizierte bevorzugte Netz sich von dem unterscheidet, das für das Senden der eingehenden Nachricht verwendet wird, das Verfahren ferner eine Übertragung, durch den Server, einer spezifischen Information über das neue Netzwerk umfasst, das das mobile Objekt auswählen soll.

## Claims

1. Method of establishing, via a mobile communication network, aconnection between a mobile object (1) which is provided with a radio module and a server (5) which is remote from the mobile object, in which method the mobile object (1) has a list comprising a predetermined number of preferred mobile communication networks to which the mobile object can be caused to connect, the method comprising:
- a first step of establishment, by said mobile object, of a radio connection with the server (5) by means of an available mobile communication network from among said preferred mobile communication networks, and of transmission over said radio connection of an identifier of the mobile object, an identifier of said available network, and a first series of audit information, comprising at least one piece of information chosen from among the reception signal level and an error rate,
- if the server (5) receives said first series of information, a step of verification, by said server (5), of the received data, and a step of sending an acknowledgment of receipt to said mobile object, which acknowledgment validates an IP connection between said mobile object and said server and indicates, on the basis of the result of said verification step, whether the mobile communication network to which said mobile object is connected is suitable or whether another mobile communication network needs to be selected by the radio module,
and in that if the mobile object does not receive the acknowledgment of receipt from the server, said radio module automatically selects another available mobile communication network.

2. Method according to the main claim, wherein, in standby mode, the server waits for incoming messages from the mobile object and, upon receiving a message, said server attempts to identify the mobile object from the received identifier of the mobile object.

3. Method according to either claim 1 or claim 2, further comprising a step of verification, by the server, of whether the mobile object is registered in its internal registers and whether a network is specified as the preferred network, said verification step being performed after identification of the connected mobile object.

4. Method according to the preceding claim, wherein, if the specified preferred network is the same as that used to send the incoming message, the server acknowledges receipt of the incoming message to indicate to the communicating mobile object that the IP connection is operating correctly and that no network change is necessary.

5. Method according to claim 3, wherein, if the specified preferred network is different from that used to send the incoming message, the method further comprises transmission, by the server, of specific information concerning the new network that the mobile object needs to select.
